(19) Europäisches Patentamt
European Patent Office
Office européen des brevets

(11) EP 0 702 361 B1

(12) EUROPEAN PATENT SPECIFICATION

(45) Date of publication and mention of the grant of the patent:
**02.05.2001 Bulletin 2001/18**

(51) Int Cl.⁷: **G11B 5/73**, G11B 5/64

(21) Application number: **95306499.5**

(22) Date of filing: **14.09.1995**

(54) **Magnetic recording medium**

Magnetisches Aufzeichnungsmedium

Milieu d'enregistrement magnétique

(84) Designated Contracting States:
**DE FR GB IT NL**

(30) Priority: **14.09.1994 JP 21967694**

(43) Date of publication of application:
**20.03.1996 Bulletin 1996/12**

(73) Proprietor: **TORAY INDUSTRIES, INC.**
**Tokyo 103-8666 (JP)**

(72) Inventors:
- **Ito, Nobuaki**
**Otsu-shi, Shiga 520 (JP)**
- **Tsukuda, Akimitsu**
**Kyoto-shi, Kyoto 607 (JP)**
- **Yoneyama, Kazumasa**
**Otsu-shi, Shiga 520 (JP)**

(74) Representative: **Coleiro, Raymond et al**
**MEWBURN ELLIS**
**York House**
**23 Kingsway**
**London WC2B 6HP (GB)**

(56) References cited:
**EP-A- 0 090 499**
**EP-A- 0 182 287**
**JP-A- 63 183 613**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a magnetic recording medium, in particular, a magnetic recording medium having excellent durability and running property.

Since aromatic polyamide films have excellent heat resistance and mechanical properties, investigations have been made into their use in various fields of application. In particular, since para-oriented aromatic polyamides have mechanical properties, such as stiffness and strength, which are better than those of other polymers, it has been proposed to use films thereof in, for example, printer ribbons, magnetic tapes and capacitors. They are drawing particular attention as materials appropriate for base films of small video tapes and tapes for the external memory of computers. For these uses, for example, video tapes are more and more often used outdoors, so that magnetic tapes having excellent durability which can be safely used even if the tapes encounter large fluctuation of temperature are demanded. As for tapes for the external memory of computers, since they are often used under severe conditions such as at a high temperature and for repeated runnings, and since reliability is strongly demanded of them, a magnetic tape having excellent running property and durability is required.

An example of known magnetic recording media employing an aromatic polyamide film is described in

JP-A-58-168655, in which a ferromagnetic layer is formed on an aromatic polyamide film which contains not less than 50 mol% of para-aromatic amide units and has a tensile Young's modulus in at least one direction of not less than 500 kg/mm$^2$ (4.9 GPa) in order to promote dimensional stability against external force, and fluctuation of temperature and humidity. JP-A-62-112218 discloses a magnetic tape in which a magnetic layer is formed on an aromatic polyamide film having a thickness of 3 - 8 μm, a tensile Young's modulus in the longitudinal direction of not less than 1300 kg/mm$^2$ (12.7 GPa), an edge tearing strength in all directions of not less than 9.8N (1 kgf) and a light transmittance at 600 nm of not less than 60%, in order to reduce jitter, foldings and wrinkles in the tape. US-A-4645702 discloses a magnetic recording medium in which a magnetic layer is formed on an aromatic polyamide film having a density of 1.400 - 1.490 (g/cm$^3$) and a product of the coefficient of thermal expansion and heat shrinkage factor of 1.0 x $10^{-4}$ to 1.0 x $10^{-7}$ (mm/mm/°C) ∗ (%), in order to promote flatness after forming the magnetic layer. JP-B-55-9425 discloses a process for producing an aromatic polyamide film having substituent groups introduced into the aromatic polyamide, having an inherent viscosity of not more than 0.55, and having a content of ionic inorganic compounds of not less than 1000 ppm, for the purpose of reducing curl and promoting the heat resistance of the aromatic polyamide film. The ionic inorganic compounds referred to therein are compounds derived from a lithium salt or calcium salt employed as a solubilizer, and sulfuric acid used as a solvent.

JP-A-63-183613 discloses a magnetic recording medium including a film having formed thereon a magnetic layer, the film comprising a PPTA polymer having a Young's Modulus of 1000 kg/mm$^2$ or more, an elongation of 10% or more, a hygroscopic expansion of 3 x $10^{-5}$ mm/mm/% RH or less, a heat shrinkage of 0.2% or less at 250°C, a center-line mean roughness (Ra) of 0.05 μm and a thickness of 8 μm or less.

However, since magnetic recording media recently have large capacities, are small and thin, and are more and more often used under severe conditions such as at a high temperature, a magnetic recording medium having better running property and durability than are attained by the above-described known techniques is demanded. It is said the demand will be more and more severe.

We have studied the factors which control running property and durability to discover that running property and durability can be promoted by taking control of the oozing of low molecular weight impurities such as oligomers contained in the film.

The present invention seeks to overcome the above-mentioned problems and to provide a magnetic recording medium having excellent running property and durability even after use for a long time, exploiting the excellent heat resistance and high stiffness of aromatic polyamides.

That is, the present invention provides a magnetic recording medium comprising a base film consisting essentially of an aromatic polyamide and a magnetic layer formed on at least one surface of the base film, wherein the base film has a content of materials which are extractable with methylene chloride of not more than 0.5% by weight of the base film, a tensile Young's modulus in at least one direction of not less than 700 kg/mm$^2$ (6.9 GPa) and a dimensional change in the longitudinal direction after applying a load of 1 kg per 1 mm$^2$ (9.8 N per/mm$^2$) at 100°C for 10 minutes of not more than 2%. The present invention also provides such a film for use as a base film in a magnetic recording medium.

The aromatic polyamide used in the present invention preferably comprises units expressed by the formula (I) and/or (II) preferably in an amount of not less than 50 mol%, more preferably not less than 70 mol%.

Formula (I) $\left\{ HN\text{-}Ar_1\text{-}NHCO\text{-}Ar_2\text{-}CO \right\}$

Formula (II) $\{HN-Ar_3-CO\}$

wherein $Ar_1$, $Ar_2$ and $Ar_3$ represent, for example,

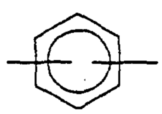
,
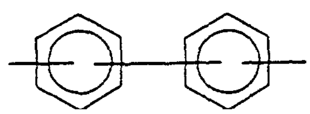
,
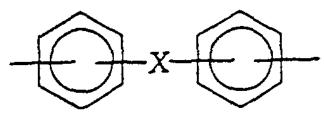

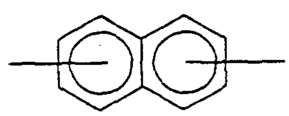
,
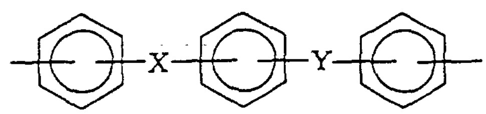

(wherein X and Y represent, for example, -O-, $-CH_2-$, -CO-, $-SO_2-$, -S-, $-C(CH_3)_2-$). However, $Ar_1$, $Ar_2$ and $Ar_3$ are not restricted to those described above. Furthermore, in the aromatic polyamides mentioned above at least one and possibly more of the hydrogen atoms on the aromatic rings may each, independently of one another, be substituted with a halogen atom such as fluorine, chlorine or bromine (especially chlorine); nitro group; a $C_{1-3}$ alkyl group such as methyl, ethyl or propyl (especially methyl); a $C_{1-3}$ alkoxy group such as methoxy, ethoxy, propoxy or isopropoxy (especially methoxy); and/or at least a proportion of the hydrogen atoms in the amide bonds in the polymer may be substituted, for example, by $C_{1-3}$ alkyl, $C_{1-3}$ alkoxy or phenyl.

The aromatic polyamide preferably contains para-aromatic amide units in an amount of not less than 50%, more preferably not less than 70% because then the stiffness and heat resistance of the film are good. To lower the moisture absorption, it is preferred that aromatic amide units in which a proportion of the hydrogen atoms on the aromatic ring are substituted with halogen (especially chlorine) be contained in an amount of not less than 30% based on the total aromatic polyamide.

It is more preferred that the aromatic polyamide contains a unit of the formula:

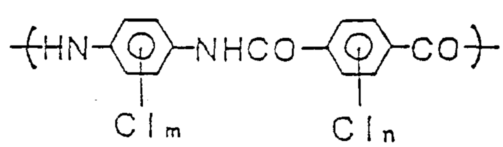

(wherein m and n independently represent zero or an integer of up to 4) in an amount of not less than 50 mol%, still more preferably not less than 70 mol%.

An aromatic polyamide which may be used in the present invention contains a repeating unit represented by the above-described formula (I) and/or formula (II) in an amount of not less than 50 mol%. The remaining less than 50 mol% may be other repeating units (such as aromatic polyimide) copolymerized or blended with the aromatic amide units. Further, additives such as electro-conductive particles, lubricants and antioxidants may be present in the aromatic polyamide in an amount not adversely affecting the physical properties of the film.

It is desirable that the base film of the magnetic' recording medium according to the present invention have a tensile Young's modulus in at least one direction of not less than 700 $kg/mm^2$ (6.9 GPa), preferably not less than 900 $kg/mm^2$ (8.8 GPa), still more preferably not less than 1200 $kg/mm^2$ (11.8 GPa) in the absence of the magnetic layer(s) and any other layer such as a back coat layer. If the tensile Young's modulus is less than 700 $kg/mm^2$ (6.9 GPa), the stiffness of the magnetic tape is too small, so that desired output cannot be attained or the tape is deformed to an extent that the tape cannot be practically used.

In a magnetic recording medium according to the present invention, the amount of the materials in the base film which are extractable with methylene chloride must be not more than 0.5%, preferably not more than 0.2%, still more preferably not more than 0.1%, by weight of the base film. If it is more than 0.5%, impurities such as oligomers

emerge on the surface of the film from the inner part of the film, which make the running property and the durability of the magnetic tape bad. It is thought that the running property and durability deteriorate because the impurities ooze out onto the surface of the magnetic layer or onto the surface opposite to the magnetic layer.

It should be noted, however, if the amount of the materials in the base film, which are extracted with methylene chloride, is more than 0.1 ppm, a lubricating effect may be obtained. Therefore, the amount of the methylene chloride-extractable materials in the base film is preferably not less than 0.1 ppm, still more preferably not less than 5 ppm.

In a magnetic recording medium according to the present invention, it is desirable that the dimensional change of the base film in the longitudinal direction after applying a load of 1 kg per 1 $mm^2$ (9.8 N per/$mm^2$) at 100°C for 10 minutes be not more than 2%, preferably not more than 1.5%, still more preferably not more than 1.0% in the absence of the magnetic layer(s) and any other layer such as a back coat layer. In response to the demand for making the magnetic recording medium thin, the magnetic recording medium according to the present invention may need to be capable of use in the form of a thin film. Thus, then if the dimensional change is more than 2%, elongation and shrinkage of the tape are caused by tension, so that recording-reproducing properties are impaired. Furthermore,because of the high dimensional stability (not more than 2%) of the base film, the dimensional change of the tape during the drying step after forming the coating layer is small. Thus, the high dimensional stability is also advantageous in processing the film.

To give appropriate surface roughness so as to stabilize the running property and durability of the magnetic recording medium according to the present invention, it is preferred to incorporate particles into the base film. Examples of particles which may be added to the base film include inorganic particles such as particles of $SiO_2$, $TiO_2$, $Al_2O_3$, $CaSO_4$, $BaSO_4$, $CaCO_3$, carbon black, zeolite and metals; and organic particles such as silicone particles, polyimide particles, cross-linked copolymer particles, cross-linked polyester particles and Teflon particles. In view of heat resistance, inorganic particles are preferred. The diameter of the particles may preferably be 0.01 - 1.0 μm, more preferably 0.05 - 0.5 μm because the electro-magnetic conversion property and running property are then good. The content of the particles may preferably be 0.01 - 10 wt%, more preferably 0.1 - 5 wt% because the output properties and running property are then good.

The center-line mean roughness (hereinafter referred to as "Ra") of at least one surface of the base film of the magnetic recording medium according to the present invention is preferably 0.1 - 100 nm, more preferably 0.3 - 70 nm, still more preferably 0.5 - 50 nm. If Ra is more than 100 nm, output properties may be impaired. If Ra is less than 0.1 nm, running property and durability may be impaired.

The center-line mean depth (hereinafter referred to as "Rp") of at least one surface of the base film is preferably 2 - 500 nm, more preferably 3 - 300 nm, still more preferably 4 - 200 nm. If Rp is more than 500 nm, out put properties may be impaired. If Rp is less than 2 nm, running property and durability may be impaired.

The ten-point mean roughness (hereinafter referred to as "Rz") of at least one surface of the base film is preferably 2 - 500 nm, still preferably 3 - 300 nm, still more preferably 4 - 200 nm. If Rz is more than 500 nm, out put properties may be impaired. If Rz is less than 2 nm, running property and durability may be impaired.

As long as the tensile Young's modulus of the base film in at least one direction is not less than 700 kg/$mm^2$ (6.9 GPa), the base film of the magnetic recording medium according to the present invention may be provided with a higher strength in the longitudinal direction, transverse direction or in an oblique direction. Usually, the base film is stretched in the longitudinal or transverse direction. Although the degree of strengthening is not restricted, in view of the properties such as elongation and tear resistance, it is practical that the tensile Young's modulus in the longitudinal direction END and the tensile Young's modulus in the transverse direction $E_{TD}$ satisfy the following relationship.

$$0.5 \leq E_{MD}/E_{TD} \leq 2$$

The thickness of the base film of the magnetic recording medium according to the present invention is preferably 0.5 - 15 μm, more preferably 1 - 8 μm, still more preferably 2 - 5 μm, because excellent running property and electro-magnetic conversion property, which are achievable in a magnetic recording medium embodying the present invention, may then be obtained.

A base film of a magnetic recording medium embodying the present invention is preferably stretched so as to provide an elongation in at least one direction of not less than 10%, more preferably not less than 20%, still more preferably not less than 30% because the tape then has an appropriate flexibility.

The moisture absorption of a base film of a magnetic recording medium according to the present invention is preferably not more than 4%, more preferably not more than 3%, still more preferably not more than 2%, because then the dimensional change of the tape due to fluctuation of humidity is small so that good electro-magnetic conversion property may be maintained.

A magnetic recording medium embodying the present invention comprises the above-described base film and a magnetic layer formed on at least one surface of the base film.

Methods for forming the magnetic layer include wet methods in which a magnetic coating composition prepared by mixing ferromagnetic powder with a binder is applied to the base film; and dry methods such as vapor-deposition method, sputtering method and ion-plating method. Although the method for forming the magnetic layer is not restricted, a wet method will now be described as an example.

The type of the magnetic power for forming the magnetic layer is not restricted and ferromagnetic powder such as powder of ferric oxide, chromium oxide, Fe, Ba-Fe, Co, Fe-Co, Fe-Co-Ni, Co-Ni and Co-Cr may preferably be employed.

The magnetic powder can be formulated into a magnetic coating composition by mixing the powder with one or more of various binders. As the binder, thermosetting resin-based binders and radiant beam setting resin-based binders are preferred. Dispersing agents, lubricants and anti-static agents may also be used. For example, a binder comprising vinyl chloride/vinyl acetate/vinyl alcohol copolymers, polyurethane prepolymers and isocyanate may be used.

In the magnetic recording medium according to the present invention, in order to further promote running property, a back coat layer may be formed on the surface opposite to the surface on which the magnetic layer is formed.

A preferred process for producing the magnetic recording medium according to the present invention will now be described. It should be noted, however, that the process for producing the magnetic recording medium is not restricted thereto.

In cases where the aromatic polyamide is prepared from an acid chloride and a diamine, the aromatic polyamide may be synthesized by solution polymerization in an aprotic organic polar solvent such as N-methylpyrrolidone (NMP), dimethylacetamide (DMAc) or dimethylformamide (DMF), or by interfacial polymerization in an aqueous medium. If an acid chloride and a diamine are used as monomers, hydrogen chloride is produced as a side product. In cases where the generated hydrogen chloride is neutralized, an inorganic neutralizing agent such as calcium hydroxide, lithium hydroxide, calcium carbonate or lithium carbonate; or an organic neutralizing agent such as ethylene oxide, propylene oxide, ammonia, triethylamine, triethanolamine or diethanolamine may be used. The reaction between an isocyanate and a carboxylic acid may be carried out in an aprotic organic polar solvent in the presence of a catalyst.

The polymer solution may be used as itis as the film-forming solution. Alternatively, the polymer is once separated from the solution and the polymer is dissolved again in the above-mentioned organic solvent or in an inorganic solvent such as sulfuric acid to form a film-forming solution.

To obtain the aromatic polyamide film according to the present invention, the inherent viscosity of the polymer (the value obtained by measuring the viscosity of the solution containing 0.5 g of the polymer in 100 ml of 98% sulfuric acid at 30°C) is preferably not less than 0.5.

To the film-forming solution, as a solubilizer, an inorganic acid such as calcium chloride, magnesium chloride, lithium chloride or lithium nitrate may be added. The concentration of the polymer in the film-forming solution is preferably about 2 - 40% by weight.

The particles may be added by well mixing the particles with a solvent to form a slurry and using the obtained slurry as a solvent for polymerization or for dilution; or the particles may be directly added to the film-forming solution after preparing the film-forming solution.

The film-forming solution prepared as described above is subjected to the so called solution casting process so as to form a film. The solution casting process includes dry/wet process, dry process and wet process. Although the film may be formed by any of these methods, the dry/wet process will now be described as an example.

In cases where the film is prepared by the dry/wet process, the film-forming solution is extruded through a die onto a support such as a drum or an endless belt made, for example, of nickel, stainless steel, copper, titanium, tantalum or "Hastelloy", a commercially available Ni-Mo alloy, which may contain other metal element(s), to form a thin film. The thin film layer is then dried to evaporate the solvent until the thin film acquires a self-supporting property. The drying may be carried out at room temperature to 250°C for not more than 60 minutes, more preferably at room temperature to 200°C. If the drying temperature is higher than 250°C, voids may be formed and the surface may be roughened because of the rapid heating, so that a film which may be practically used as an industrial material and a magnetic material may not be obtained.

The film after the above-mentioned dry process is peeled off from the support and subjected to a wet process in which the solvent and impurities contained in the film are removed. The bath is usually an aqueous bath which may contain, for example, an organic solvent or inorganic salt in addition to water. However, the bath usually contains water in an amount of not less than 30%, more preferably not less than 50%, and the bath temperature is usually 0 - 100°C. Furthermore, to decrease the impurities in the film, it is effective to raise the bath temperature to 50°C or higher, or to pass the film through a bath of an organic solvent in addition to the aqueous bath. As the organic solvent, halogenated hydrocarbons such as chloroform, methylene chloride, "Freon"; and other organic solvents such as alcohols, ketones and ethers may be employed. In the wet process, the film peeled off from the above-mentioned support is immersed under tension in the above-mentioned one or more baths, thereby extracting the impurities in the film to a content of not more than 0.5%, preferably not more than 0.2%, still more preferably not more than 0.1%.

The film produced by the wet process is then stretched, dried and heat set to prepare a final film.

The film is stretched during the film-forming process so as to attain the desired mechanical characteristics. The area stretching ratio (the value obtained by dividing the area of the film after stretching by the area of the film before stretching, an area stretching ratio not more than 1 signifying relaxing) is preferably 0.8 - 5.0, more preferably 1.1 - 3.0. By annealing the film after heat setting, dimensional change may be reduced. In this case, it is effective to anneal the film at a rate of not more than 100°C/second.

Then a magnetic layer is coated on the film. Although the magnetic layer may be coated by any of the known methods, a method using a gravure roll is preferred in view of the uniformity of the coated layer. The drying temperature after coating is preferably 80 - 150°C. A calender process may preferably be carried out at 25°C to 150°C.

Thereafter, to further promote the running property, a back coat layer may be formed on the surface of the base film opposite to the magnetic layer by a known method.

After curing the film coated with the magnetic layer, the film may be slit to obtain a magnetic recording medium embodying the present invention. The magnetic recording medium may be used, for example, as 8 mm tapes for personal or professional uses; as D-1,2,3 for broadcasting uses; and DDS-2, 3, 4,QIC and Data-8mm for data-storage uses, although the uses of the medium are not restricted thereto.

The methods for measuring and evaluating characteristics relating to the present invention will now be described.

(1) Tensile Young's Modulus, Elongation and Strength

Tensile Young's modulus, elongation and strength were measured in accordance with ASTM D882-81 using an instron type tensile tester. The width of the test sample was 10 mm, and the guage length was 100 mm, and the stretching rate was 300 mm/min.

(2) Dimensional Change

Label lines are drawn on the film at intervals of 150 mm. The film is then slit to a width of 10 mm to obtain a test sample. The thickness of the test sample is measured with a micrometer and a weight is attached to the sample such that the load is 1 kg/mm$^2$ (9.8 N/mm$^2$). Under these conditions, the sample is heated in an oven at 100°C for 10 minutes and the dimensional change is calculated according to the following equation.

$$\text{Dimensional Change (\%)} = \frac{|A - B|}{A} \times 100$$

(wherein A means the guage length before heating and B means the guage length after heating)

(3) Amount of Materials Extracted with Methylene Chloride

Minced film is supplied to a Soxhlet's extractor and purified methylene chloride is then added thereto. The mixture is then heated at the boiling point for 1 hour. The resultant is then transferred to a rotary evaporator and concentrated to a constant weight while adjusting the degree of vacuum, followed by measuring the weight of the residue.

(4) Surface Roughness

The surface roughness was measured 5 times using a high precision film gap measuring instrument (ET-10) commercially available from Kosaka Kenkyujo and the surface roughness is expressed in terms of the average of the measured values. The radius of the tip of the stylus was 0.5 µm, the load of the touching pin was 5 mg, the cut off value was 0.08 mm and the measured length was 0.5 mm.

(5) Running Property

A film having a coating layer thereon is slit to a width of 12.7 mm (1/2 inch) and the obtained tape is made to run contacting a guide pin (Ra: 100 nm) using a tape running tester (running speed: 100 m/min, winding angle: 60°). Before the running test, the tape is aged at 60°C and 80% RH for 48 hours. In the running test, the tape is made to run with the surface opposite to the magnetic layer in contact with the guide pin at 40°C, 80% RH. After 10 runs, the change in the dynamic frictional coefficient was measured. Those tapes for which the change is not more than 10% are classified by the symbol "◎", those for which the change is more than 10% and not more than 15% are classified

by the symbol "O", those for which the change is more than 15% and not more than 20% are classified by the symbol "Δ", and those for which the change is more than 20% are classified by the symbol "X".

(6) Durability

The running test as described above is carried out 100 times (100 mins) and the tape is observed after the test. Those for which no deformation was observed at all are classified by the symbol "O", those for which slight and sporadic deformations of the tape are observed are classified by the symbol "Δ", those for which large deformation of the tape is observed in the entire tape are classified by the symbol "X".

Embodiments of the present invention will now be described by way of Examples thereof.

Example 1

A slurry of silica particles was prepared by dispersing dry silica particles having a primary particle diameter of 0.02 μm so as to attain an average particle size of 0.2 μm in N-methylpyrrolidone (NMP).

In a polymerization vessel, NMP and the above-described silica slurry were placed. In this mixture, as aromatic diamine components, 85 mol% of 2-chloroparaphenylenediamine and 15 mol% of 4,4'-diaminodiphenyl ether were dissolved, and then 2-chloroterephthalic chloride in an amount of 99 mol% based on the aromatic diamine components was added, followed by stirring for 2 hours to complete the polymerization. Ninety seven mol% of the generated hydrogen chloride was neutralized with lithium hydroxide and 7 mol% of diethanolamine was added to obtain a polymer solution. The content of the particles was 2% by weight based on the aromatic polyamide. The polymer solution was adjusted to attain a polymer concentration of 11% by weight and a viscosity of 400 Pa.s (4000 poise) at 30°C to obtain a film-forming solution.

The film-forming solution was defoamed under a reduced pressure of $1.33 \times 10^4$ Pa (100 Torr) in a screw extruder and the solution was passed through a filter having a cut size of 5 μm. The solution was then extruded through a die heated at 50°C onto a metal belt. The cast film on the metal belt was heated with hot air at 150°C for 2 minutes to evaporate the solvent and the resulting film which acquired a self-supporting property was continuously peeled off from the belt. The film was then introduced into a water bath at 60°C having a concentration gradient of NMP to extract the remaining solvent and inorganic salts and the like produced by the neutralization. The extraction time was 5 minutes. The film was then immersed in chloroform bath at 30°C for 2 minutes. In these water and chloroform baths, the film was stretched in the longitudinal direction (MD) to a total stretching ratio of 1.1 times the original length.

The film was then introduced into a tenter and heated at 280°C for 1 minute to carry out drying and heat setting. During this heating, the film was stretched in the transverse direction (TD) at a stretching ratio of 1.4 times the original length. The film was then annealed to 200°C at a rate of 30°C/second to obtain a film with a thickness of 4.5 μm. The characteristics of this film are shown in Table 1.

A magnetic coating composition having the composition described below was prepared and coated on the surface which does not contact the metal belt during the film-forming process with a gravure roll to a prescribed thickness, followed by curing and calendering. The thickness of the magnetic layer was 2 μm.

| | |
|---|---|
| Magnetic powder (metal powder) | 80 parts by weight |
| Vinyl chloride-based copolymer | 10 parts by weight |
| Polyurethane | 10 parts by weight |
| Curing agent | 5 parts by weight |
| Polishing agent | 5 parts by weight |
| Toluene | 100 parts by weight |
| Methyl ethyl ketone | 100 parts by weight |

The resulting coated film was slit to obtain a magnetic tape. The running property and durability of this tape were evaluated and were excellent. The evaluations of the running property and durability of this magnetic tape are summarized in Table 1.

Example 2

Polymerization and neutralization were carried out in the same manner as in Example 1 except that 95 mol% of 2-chloroparaphenylenediamine and 5 mol% of 4,4'-diaminodiphenyl ether were used as the aromatic diamine components. The polymer concentration was adjusted to 9% by weight and the viscosity of the solution at 30°C was adjusted to 400 Pa.s (4000 poise) to obtain a film-forming solution.

In the same manner as in Example 1, the film-forming solution was cast on a metal belt and the solvent was evaporated, followed by introducing the film into a water bath to extract the remaining solvent and inorganic salts and the like produced by the neutralization. The extraction time was 5 minutes. The film was then immersed in chloroform baths at 30°C for 1 minute. In these baths, the film was stretched in the longitudinal direction (MD) at a stretching ratio of 1.4 times the original length.
The film was then introduced into a tenter and heated at 280°C for 1 minute to carry out drying and heat setting. During this heating, the film was stretched in the transverse direction at a stretching ratio of 1.2 times the original length. The film was then annealed to 150°C at a rate of 50°C/second to obtain a film with a thickness of 4.5 µm. The characteristics of this film are shown in Table 1.
A magnetic layer having a thickness of 2 µm was formed in the same manner as in Example 1 and a back coat layer having a thickness of 0.5 µm was formed on the surface opposite to the magnetic layer. The coating composition for forming the back coat layer was as follows.

| | |
|---|---|
| Carbon black | 100 parts by weight |
| Vinyl chloride-based copolymer | 20 parts by weight |
| Polyurethane | 50 parts by weight |
| Toluene | 200 parts by weight |
| Methyl ethyl ketone | 400 parts by weight |

The resulting coated film was slit to obtain a magnetic tape. The running property and durability of this tape were evaluated and were excellent. The evaluations of the running property and durability of this magnetic tape are summarized in Table 1.

Example 3

In this example, a metal evaporated tape was prepared using a polymer having the same structure as in Example 1. In the solution of the aromatic diamine in NMP, spherical silica particles having a diameter of 50 nm were dispersed to a content of 0.5% by weight based on the polymer. To this mixture, 2-chloroterephthalic chloride was added as in Example 1 to complete the polymerization, and then the neutralization was carried out. The polymer concentration was adjusted to 11% by weight and the viscosity of the solution at 30°C was adjusted to 500 Pa.s (5000 poise).
The thus obtained film-forming solution was passed through a filter having a cut size of 1 µm and extruded through a die onto a metal belt. After heating the cast film with hot air having a temperature of 180°C for 50 seconds to evaporate the solvent, the film was then continuously peeled off from the belt, and introduced into a water bath at 40°C. The immersion time was 3 minutes. The film was then immersed in a methylene chloride bath at 30°C for 2 minutes. In these baths, the film was stretched in the longitudinal direction (MD) at a stretching ratio of 1.2 times the original length.
The film was then introduced into a tenter and heated at 300°C for 1 minute to carry out drying and heat setting. During this heating, the film was stretched in the transverse direction (TD) at a stretching ratio of 1.3 times the original length. The film was then annealed to 150°C at a rate of 50°C/second to obtain a film with a thickness of 3.5 µm. The characteristics of this film are shown in Table 1.
The film was then mounted in a vacuum chamber and treated with glow discharge under argon atmosphere at 1.33 Pa ($10^{-2}$ Torr). The vacuum chamber was then evacuated to $1.33 \times 10^{-3}$ Pa ($10^{-5}$ Torr) and the film was made to run along a drum at 20°C. While running the tape, Co-Ni alloy (Co: 80 wt%, Ni: 20 wt%) was heated with an electron beam to form a magnetic layer having a thickness of 150 nm on the film. A back coat layer was then formed as in Example 2 to obtain a magnetic tape.
The resulting coated film was slit to obtain a magnetic tape. The running property and durability of this tape were evaluated and were excellent. The characteristics of the film and evaluations of the running property and durability of this magnetic tape are shown in Table 1.

Example 4

Using the film-forming solution prepared in Example 3, a film having a thickness of 3.5 µm was prepared. The film was prepared in the same manner as in Example 3 except that a "Freon" (a commercially available polyhalogenated hydrocarbon) bath at 20°C was used in place of the methylene chloride bath and the immersion time therein was 1 minute. On this film, a magnetic layer and a back coat layer were formed as in Example 3. The running property and durability of the obtained magnetic tape were evaluated and were excellent. The characteristics of the film and evaluations of the running property and durability of this magnetic tape are shown in Table 1.

Example 5

A film having a thickness of 4.5 μm was prepared in the same manner as in Example 1, except that a methanol bath at 10°C was employed in place of the chloroform bath at 30°C, immersion time therein was 60 seconds, and that the stretching ratios in MD and TD were 1.2 times and 1.3 times the original length, respectively. A magnetic layer and a back coat layer were formed in the same manner as in Example 2. The running property and durability of the obtained magnetic tape were evaluated and were excellent. The characteristics of the film and evaluations of the running property and durability of this magnetic tape are shown in Table 1.

Example 6

A film having a thickness of 4.5 μm was prepared in the same manner as in Example 1, except that a methanol bath at 10°C was employed in place of the chloroform bath at 30°C, immersion time therein was 30 seconds, and that the stretching ratios in MD and TD were 1.2 times and 1.3 times the original length, respectively. A magnetic layer and a back coat layer were formed in the same manner as in Example 2. The running property and durability of the obtained magnetic tape were evaluated and were satisfactory. The characteristics of the film and evaluations of the running property and durability of this magnetic tape are shown in Table 1.

Example 7

A film having a thickness of 2.3 μm was prepared in the same manner as in Example 1, except that the film was immersed in a water bath at 60°C having a gradient of concentration of NMP for 15 minutes and then in a chloroform bath at 30°C for 10 minutes, and that the stretching ratios in MD and TD were 1.2 times and 1.3 times the original length, respectively. A magnetic layer and a back coat layer were formed on this film in the same manner as in Example 2. The running property and durability of the obtained magnetic tape were evaluated and were satisfactory. The characteristics of the film and evaluations of the running property and durability of this magnetic tape are shown in Table 1.

Example 8

In this Example, a metallized tape was prepared using a polymer having the same structure as in Example 1. In the solution of the aromatic diamine in NMP, spherical silica particles having a diameter of 10 nm were dispersed to a content of 0.01% by weight based on the polymer. To this mixture, 2-chloroterephthalic chloride was added as in Example 1 to complete the polymerization, and then the neutralization was carried out. The polymer concentration was adjusted to 11% by weight and the viscosity of the solution at 30°C was adjusted to 420 Pa.s (4200 poise).

A film having a thickness of 4.5 μm was prepared in the same manner as in Example 1 except that a filter having a cut size of 1 μm was used in place of the filter having a cut size of 5 μm, and that the stretching ratios in MD and TD were 1.2 times and 1.3 times the original length, respectively. A magnetic layer and a back coat layer were formed on this film in the same manner as in Example 2. The running property and durability of the obtained magnetic tape were evaluated and were satisfactory. The characteristics of the film and evaluations of the running property and durability of this magnetic tape are shown in Table 1.

Example 9

A film having a thickness of 4.5 μm was prepared in the same manner as in Example 1, except that the stretching ratios in both MD and TD were 1.0 times the original length. A magnetic layer and a back coat layer were formed on this film in the same manner as in Example 2. The running property and durability of the obtained magnetic tape were evaluated and were good. The characteristics of the film and evaluations of the running property and durability of this magnetic tape are shown in Table 1.

Example 10

A film having a thickness of 7.5 μm was prepared in the same manner as in Example 1, except that the stretching ratios in MD and TD were 1.2 times and 1.3 the original length, respectively. A magnetic layer and a back coat layer were formed on this film in the same manner as in Example 2. The running property and durability of the obtained magnetic tape were evaluated and were excellent. The characteristics of the film and evaluations of the running property and durability of this magnetic tape are shown in Table 1.

Comparative Example 1

Using the same film-forming solution as in Example 1, a film was formed employing the same dry process as in Example 1. In the wet process, however, the film was immersed in a water bath at 0°C for 1 minute and the chloroform bath was not used. As shown in Table 1, the amount of the materials extracted with methylene chloride is large. The running property and durability were evaluated and found to be bad. The film characteristics and evaluations of running property and durability are shown in Table 1.

Comparative Example 2

A film having a thickness of 4.5 μm was prepared as in Example 1 except that the film was not immersed in the water bath having a gradient of NMP concentration but immersed only in the chloroform bath at 30°C for 30 seconds, and that the stretching ratios in MD and TD were 1.2 times and 1.3 the original length, respectively. A magnetic layer and a back coat layer were formed on this film in the same manner as in Example 2. The running property and durability of the obtained magnetic tape were evaluated and found to be bad. The film characteristics and evaluations of running property and durability are shown in Table 1.

Comparative Example 3

A film having a thickness of 4.5 μm was prepared as in Example 1 except that the heat set temperature in the tenter was 200°C and the annealing in the tenter was not carried out. A magnetic layer and a back coat layer were formed on this film in the same manner as in Example 2. The running property and durability of the obtained magnetic tape were evaluated and found to be bad. The film characteristics and evaluations of running property and durability are shown in Table 1.

Comparative Example 4

A film having a thickness of 4.5 μm was prepared as in Example 1 except that 2-chloroparaphenylenediamine was used as the aromatic diamine component, 99 mol% of isophthalic chloride was used as the acid component and that the stretching ratios in MD and TD were 1.2 times and 1.3 times the original length, respectively. The tensile Young's modulus of this film was, at maximum, 650 kg/mm$^2$ (6.4 GPa), in MD, 600 kg/mm$^2$ (5.9 GPa) in TD, and 660 kg/mm$^2$ (6.5 GPa) in the direction shifted clockwise from MD by 30°. A magnetic layer and a back coat layer were formed on this film in the same manner as in Example 2. The running property and durability of the obtained magnetic tape were evaluated and found to be bad. The film characteristics and evaluations of running property and durability are shown in Table 1.

Comparative Example 5

In a polymerization vessel, NMP and the silica slurry as used in Example 1 were placed. In this mixture, as aromatic diamine component, 100 mol% of 4,4'-diaminodiphenyl ether was dissolved, and then pyromellitic dianhydride in an amount of 99 mol% based on the aromatic diamine component was added, followed by stirring for 2 hours to complete the polymerization, thereby obtaining a polymer solution. The content of the particles was 2% by weight based on the aromatic polyimide. The polymer solution was adjusted to attain a polymer concentration of 15% by weight and a viscosity of 400 Pa.s (4000 poise) at 30°C to obtain a film-forming solution.

The film-forming solution was defoamed under a reduced pressure of $1.33 \times 10^4$ Pa (100 Torr) in a screw extruder and the solution was passed through a filter having a cut size of 5 μm. The solution was then extruded through a die heated at 50°C onto a metal belt. The cast film on the metal belt was heated with hot air at 150°C for 2 minutes to evaporate the solvent and the resulting film which acquired self-supporting property was continuously peeled off from the belt. The thus obtained self-supporting film was then introduced into a tenter and heated at 350°C for 1 minute to carry out evaporation of the remaining solvent and heat setting. During this heating, the film was stretched in MD at a stretching ratio of 1.2 times the original length and in TD at a stretching ratio of 1.3 times the original length. The film was then annealed to 200°C at a rate of 30°C/second to obtain a film with a thickness of 12.0 μm. The tensile Young's modulus of this film was, at maximum, 310 kg/mm$^2$ (3.0 GPa) in MD, 320 kg/mm$^2$ (3.1 GPa) in TD, and 340 kg/mm$^2$ (3.3 GPa) in the direction shifted clockwise from MD by 30°. A magnetic layer and a back coat layer were formed on this film in the same manner as in Example 2. The running property and durability of the obtained magnetic tape were evaluated and found to be bad. The film characteristics and evaluations of running property and durability are shown in Table 1.

Table 1

| | Film Thickness (μm) | Amount of Extracted Materials (%) | Ra (nm) | Rp(nm) | Rz (nm) | Dimensional Change (%) | | Young's Modulus ($kg/mm^2$)(GPa) | |
|---|---|---|---|---|---|---|---|---|---|
| | | | | | | MD | TD | MD | TD |
| Example 1 | 4.5 | 0.02 | 7 | 41 | 56 | 0.9 | 0.2 | 1100 (10.8) | 1600 (15.7) |
| Example 2 | 4.5 | 0.05 | 7 | 45 | 58 | 0.1 | 0.6 | 1800 (17.6) | 1200 (11.8) |
| Example 3 | 3.5 | 0.001 | 1 | 7 | 8 | 0.3 | 0.3 | 1450 (14.2) | 1450 (14.2) |
| Example 4 | 3.5 | 0.1 | 1 | 9 | 10 | 0.3 | 0.3 | 1450 (14.2) | 1450 (14.2) |
| Example 5 | 4.5 | 0.18 | 8 | 45 | 60 | 0.9 | 0.3 | 1100 (10.8) | 1600 (15.7) |
| Example 6 | 4.5 | 0.4 | 8 | 45 | 55 | 0.4 | 0.4 | 1450 (14.2) | 1420 (13.9) |
| Example 7 | 2.3 | NIL | 6 | 37 | 48 | 0.6 | 0.5 | 1480 (14.5) | 1460 (14.3) |
| Example 8 | 4.5 | 0.02 | 0.5 | 1.7 | 2.5 | 0.5 | 0.4 | 1430 (14.0) | 1450 (14.2) |
| Example 9 | 4.5 | 0.02 | 7 | 42 | 55 | 1.4 | 1.5 | 920 (9.0) | 860 (8.4) |
| Example 10 | 7.5 | 0.1 | 8 | 43 | 60 | 0.3 | 0.4 | 1400 (13.7) | 1390 (13.6) |
| Comparative Example 1 | 4.5 | 0.7 | 7 | 44 | 60 | 1.0 | 0.2 | 1100 (10.8) | 1550 (15.2) |
| Comparative Example 2 | 4.5 | 0.8 | 9 | 45 | 60 | 0.6 | 0.7 | 1430 (14.0) | 1440 (14.1) |
| Comparative Example 3 | 4.8 | 0.07 | 8 | 41 | 55 | 2.3 | 1.2 | 640 (6.3) | 920 (9.0) |
| Comparative Example 4 | 4.5 | 0.04 | 6 | 38 | 50 | 2.7 | 2.6 | 650 (6.4) | 600 (5.9) |
| Comparative Example 5 | 12 | 1.2 | 10 | 50 | 65 | 0.2 | 0.2 | 310 (3.0) | 320 (3.1) |

Table 1 (continued)

| | Strength (kg/mm$^2$) | | Elongation (%) | | moisture absorption (%) | Running Property | Durability |
|---|---|---|---|---|---|---|---|
| | MD | TD | MD | TD | | | |
| Example 1 | 52 | 70 | 50 | 43 | 1.5 | ◎ | ○ |
| Example 2 | 72 | 55 | 35 | 43 | 1.2 | ◎ | ○ |
| Example 3 | 64 | 63 | 40 | 41 | 1.5 | ◎ | ○ |
| Example 4 | 63 | 63 | 43 | 41 | 1.5 | ◎ | ○ |
| Example 5 | 51 | 69 | 48 | 42 | 1.6 | ○ | ○ |
| Example 6 | 61 | 60 | 39 | 38 | 1.6 | △ | ○ |
| Example 7 | 66 | 64 | 44 | 45 | 1.7 | ○ | △ |
| Example 8 | 64 | 63 | 40 | 41 | 1.5 | △ | ○ |
| Example 9 | 37 | 36 | 55 | 53 | 1.8 | ○ | △ |
| Example 10 | 61 | 61 | 42 | 43 | 1.6 | ◎ | ○ |
| Comparative Example 1 | 50 | 69 | 52 | 43 | 1.5 | X | X |
| Comparative Example 2 | 59 | 58 | 39 | 38 | 2.1 | X | X |
| Comparative Example 3 | 34 | 41 | 50 | 44 | 2.5 | X | X |
| Comparative Example 4 | 44 | 43 | 75 | 75 | 2.8 | X | X |
| Comparative Example 5 | 30 | 29 | 75 | 70 | 2.6 | X | X |

## Claims

1. A magnetic recording medium comprising a base film consisting essentially of an aromatic polyamide and a magnetic layer formed on at least one surface of the base film, wherein the base film has a content of materials which are extractable with methylene chloride of not more than 0.5% by weight of the base film, a tensile Young's modulus in at least one direction of not less than 700 kg/mm$^2$ (6.9 GPa), and a dimensional change in the longitudinal direction after applying a load of 1 kg per 1 mm$^2$ at 100°C for 10 minutes of not more than 2%.

**2.** A magnetic recording medium according to claim 1, wherein the content of materials which are extractable with methylene chloride is not less than 0.1 ppm.

**3.** A magnetic recording medium according to claim 1 or 2, wherein at least one surface of said base film has a center-line mean depth of 2 - 500 nm, a center-line mean roughness of 0.1 - 100 nm, and a ten-point mean roughness of 2 - 500 nm.

**4.** A film consisting essentially of an aromatic polyamide which film has a content of materials which are extractable with methylene chloride of not more than 0.5% by weight of the film, a tensile Young's modulus in at least one direction of not less than 700 kg/mm$^2$ (6.9 Gpa), and a dimensional change in the longitudinal direction after applying a load of 1 kg per 1 mm$^2$ (9.8 N per/mm$^2$) at 100°C for 10 minutes of not more than 2%.

**5.** A film according to claim 4, wherein the content of materials which are extractable with methylene chloride is not less than 0.1 ppm.

**6.** A film according to claim 4 or 5, wherein at least one surface of the film has a center-line mean depth of 2- 500 nm, a center-line mean roughness of 0.1 - 100 nm, and a ten-point mean roughness of 2 - 500 nm.

## Patentansprüche

**1.** Magnetaufzeichnungsmedium, umfassend einen Basisfilm, der im Wesentlichen aus einem aromatischen Polyamid besteht, und eine Magnetschicht, die auf zumindest einer Oberfläche des Basisfilms ausgebildet ist, worin der Basisfilm einen Gehalt an mit Methylenchlorid extrahierbaren Materialien von nicht mehr als 0,5 Gew.-%, bezogen auf den Basisfilm, einen Youngschen Elastizitätsmodul in zumindest einer Richtung von nicht weniger als 700 kg/mm$^2$ (6,9 GPa) und eine Dimensionsänderung in Längsrichtung nach Anbringen einer Last von 1 kg pro 1 mm$^2$ bei 100 °C für 10 min von nicht mehr als 2 % aufweist.

**2.** Magnetaufzeichnungsmedium nach Anspruch 1, worin der Gehalt an mit Methylenchlorid extrahierbaren Materialien nicht weniger als 0,1 ppm beträgt.

**3.** Magnetaufzeichnungsmedium nach Anspruch 1 oder 2, worin zumindest eine Oberfläche des Basisfilms eine mittlere Mittellinien-Tiefe von 2 bis 500 nm, eine mittlere Mittellinien-Rauigkeit von 0,1 bis 100 nm und eine mittlere Zehnpunkt-Rauigkeit von 2 bis 500 nm aufweist.

**4.** Film, der im Wesentlichen aus einem aromatischen Polyamid besteht, wobei der Film einen Gehalt an mit Methylenchlorid extrahierbaren Materialien von nicht mehr als 0,5 Gew.-%, bezogen auf den Film, einen Youngschen Elastizitätsmodul in zumindest eine Richtung von nicht weniger als 700 kg/mm$^2$ (6,9 GPa) sowie eine Dimensionsänderung in Längsrichtung nach dem Anbringen einer Last von 1 kg pro 1 mm$^2$ (9,8 N/mm$^2$) bei 100 °C für 10 min von nicht mehr als 2 % aufweist.

**5.** Film nach Anspruch 4, worin der Gehalt an mit Methylenchlorid extrahierbaren Materialien nicht weniger als 0,1 ppm beträgt.

**6.** Film nach Anspruch 4 oder 5, worin zumindest eine Oberfläche des Films eine mittlere Mittellinien-Tiefe von 2 bis 500 nm, eine mittlere Mittellinien-Rauigkeit von 0,1 bis 100 nm, sowie eine mittlere Zehnpunkt-Rauigkeit von 2 bis 500 nm aufweist.

## Revendications

**1.** Support d'enregistrement magnétique comprenant un film de base consistant essentiellement en un polyamide aromatique et une couche magnétique formée sur au moins une surface du film de base, où le film de base a une

teneur en matières qui peuvent être extraites au chlorure de méthylène de pas plus de 0,5% en poids du film de base, un module de Young à la traction dans au moins une direction de pas moins de 700 kg/mm$^2$ (6,9 GPa) et un changement dimensionnel en direction longitudinale après application d'une charge de 1 kg pour 1 mm$^2$ à 100°C pendant 10 minutes de pas plus de 2%.

**2.** Support d'enregistrement magnétique selon la revendication 1, où la teneur en matières qui peuvent être extraites avec du chlorure de méthylène n'est pas inférieure à 0,1 ppm.

**3.** Support d'enregistrement magnétique selon la revendication 1 ou 2, où au moins une surface dudit film de base a une profondeur moyenne sur ligne centrale de 2 - 500 nm, une rugosité moyenne sur ligne centrale de 0,1 - 100 nm, et une rugosité moyenne en dix point de 2 - 500 nm.

**4.** Film consistant essentiellement en un polyamide aromatique, lequel film a une teneur en matières qui peuvent être extraites au chlorure de méthylène de pas plus de 0,5% en poids du film, un module de traction de Young dans au moins une direction de pas moins de 700kg/mm$^2$ (6,9 GPa), et un changement dimensionnel en direction longitudinale après application d'une charge de 1 kg pour 1 mm$^2$ (9,8N par/mm$^2$) à 100°C pendant 10 minutes de pas plus de 2%.

**5.** Film selon la revendication 4, où la teneur en matières qui peuvent être extraites par du chlorure de méthylène n'est pas inférieure à 0,1 ppm.

**6.** Film selon la revendication 4 ou 5, où au moins une surface du film a une profondeur moyenne sur ligne centrale de 2-500 nm, une rugosité moyenne sur ligne centrale de 0,1-100 nm, et une rugosité moyenne en dix-points de 2-500 nm.